# EUROPÄISCHE PATENTSCHRIFT

(11) **EP 3 067 144 B1**
(45) Veröffentlichungstag und Bekanntmachung des Hinweises auf die Patenterteilung: **28.10.2020**
(21) Anmeldenummer: 16159732.3
(22) Anmeldetag: 10.03.2016
(51) Int. Cl.: B23K 101/10, B23K 9/028, B23K 9/32, B23K 37/02

(54) **SCHWEISSVORRICHTUNG MIT MOTORENTKOPPELUNGSEINRICHTUNG**
WELDING MACHINE WITH MOTOR DECOUPLING DEVICE
DISPOSITIF DE SOUDAGE COMPRENANT UN DISPOSITIF DE COUPLAGE DE MOTEUR

(30) Priorität: 11.03.2015 DE 102015003091
(43) Veröffentlichungstag der Anmeldung: 14.09.2016
(73) Patentinhaber: SPA Pipe Welding Solutions GmbH & Co. KG, 82194 Gröbenzell (DE)
(72) Erfinder: NIRSCHL, Matthias, 81371 München (DE); STEINMEIER, Wanja, 81371 München (DE); FÖRG, Christian, 81539 München (DE); OESTE, Jens, 86368 Gersthofen (DE)
(74) Vertreter: Kehl, Ascherl, Liebhoff & Ettmayr Patentanwälte Partnerschaft mbB

(56) Entgegenhaltungen:
- DE-U1-202012 012 991
- US-A- 3 844 468
- US-A- 4 132 338
- US-A1- 2003 047 585

## Beschreibung

Die Erfindung bezieht sich gemäß dem Oberbegriff von Anspruch 1 auf eine Orbitalschweißvorrichtung (siehe, zum Beispiel, US 2003/0047585 A1).

Die vorliegende Erfindung liegt auf dem technischen Gebiet der Fügetechnik. Leitungen, insbesondere Leitungen zum Führen von Gasen, bestehen oftmals aus Rohren, insbesondere aus Metall, und werden je nach Anwendungsgebiet mittels Kleben, Löten oder Schweißen miteinander verbunden. Es werden insbesondere beim Onshore- oder Offshore-Schweißen von Pipelines (Gas- & Öl-Pipelines) Orbitalschweißsysteme (Bugs) genutzt, wobei das Schweißgerät auf einem Positionierband fährt, das um ein Rohr befestigt wird, und eine jeweils zwei Rohre der Pipeline miteinander verbindende Schweißnaht mit einer oder mehreren Raupenlagen nebeneinander oder übereinander einbringt.

Die Druckschrift US 5,676,857 A offenbart ein System zum Verschweißen von Rohren, um eine lange, kontinuierliche Pipeline zu schaffen. Ein Schweißwagen bzw. ein Schweißbug ist an einer Führungsschiene, die sich um den Umfang des Rohres erstreckt, montiert. Der Schweißwagen ist mit einem Drahtvorschub, einem Motor, um den Drahtvorschub anzutreiben, und einem Antriebsmotor zum Bewegen des Bugs entlang der Führung ausgestattet. Die Geschwindigkeit des Bugs und des Drahtvorschubs ist variierbar, während der Bug kontinuierlich um das Rohr bewegt wird. Die erste Schweißnaht oder Wurzelschweißnaht wird gemäß dem Gegenstand der US 5,676,857 A von außerhalb des Rohres geschweißt. Der aus der US 5,676,857 A bekannte Bug wird dabei über einen fest installierten Stirnradantrieb angetrieben. Weiterhin weist der Bug einen Halterahmen zum Halten einer Spule zur Drahtaufnahme auf.

Eine weitere Orbitalschweißvorrichtung, die zum Verbinden von Metallrohren verwendet wird, ist durch die Druckschrift EP1100645B1 bekannt. Diese Druckschrift offenbart eine Vorrichtung zum Stumpfschweißen von Rohren oder von Bauteilen, wobei die Bauteile zumindest an den zu verschweißenden Enden flach oder rohrförmig sind oder einen Querschnitt in der Form von einem Kreisbogen haben, wobei die Vorrichtung aufweist: ein Führungselement, das eines der Enden der Rohre oder der Bauteile umgeben und daran befestigt werden kann, und einen Schlitten, der entlang des Führungselements bewegbar ist, wobei der Schlitten kraftgetriebene Einrichtungen, die dazu ausgestaltet sind, um den Schlitten entlang des Führungselements zu bewegen, einen Schweißbrenner, der in einer oszillierenden Weise relativ zu dem Schlitten in einer Richtung etwa parallel zu der Achse der zu verbindenden Rohre oder Bauteile bewegt werden kann, Einrichtungen, die dazu ausgestaltet sind, um den Schweißbrenner zu halten und ihn vertikal relativ zu dem Schlitten zu bewegen, Einrichtungen, um dem Schweißbrenner automatisch einen Schweißdraht zuzuführen, Bewegungseinrichtungen, die dazu ausgestaltet sind, die oszillierende Bewegung auf den Schweißbrenner aufzubringen, und elektronische Einrichtungen aufweist, um die Amplitude der Oszillation und/oder die Zeit zu regulieren, die der Schweißbrenner in einer oder in beiden Grenzpositionen der Oszillation verbleibt, wobei die Einrichtungen zum Halten des Schweißbrenners dazu ausgestaltet sind, diesen relativ zu dem Schlitten horizontal zu bewegen, dass die Vorrichtung Einrichtungen aufweist, die dazu ausgestaltet sind, ein Signal bezüglich der Winkelbewegung des Schweißbrenners während der Oszillation zu erzeugen, dass die Regulier-Einrichtungen Speichereinrichtungen, die dazu ausgestaltet sind, für zumindest einen der Schritte von einem Schweißvorgang eine Vielzahl von Werten, die sich zumindest auf die Frequenz und die Amplitude der Oszillation des Schweißbrenners beziehen, die für diesen Schritt des Schweißvorgangs gewünscht sind, sowie eine Start- und eine Stop-Position für die Schweißbrenner-Oszillation zu speichern, und Steuereinrichtungen aufweisen, die dazu ausgestaltet sind, die Einrichtungen zum Oszillieren des Schweißbrenners in Relation zu den gespeicherten Werten und den Signalen automatisch zu steuern, die durch die Einrichtungen zum Erfassen der Winkelbewegung des Schweißbrenners erzeugt werden.

Weiterhin offenbaren die Druckschriften US 6 617 548 B1, US 5 932 123 A und US 4 132 338 A Schweißvorrichtungen.

Die bekannten Schweißvorrichtungen bedingen oft lange Leerlaufzeiten und/oder viel Personal, insbesondere wenn die Schweißvorrichtung an einem Führungsband umpositioniert werden soll. So werden die Schweißvorrichtungen z.B. mittels eines Motors von einer Istposition in eine Sollposition verfahren, was jedoch aufgrund geringer Motorgeschwindigkeiten häufig sehr lange dauert. Alternativ müssen die Schweißvorrichtungen vom Führungsband abgenommen werden, um an der Sollposition erneut angeordnet zu werden.

Es ist somit Aufgabe der vorliegenden Erfindung eine Schweißvorrichtung, insbesondere eine Orbitalschweißvorrichtung, bereitzustellen, die gegenüber den bekannten Schweißvorrichtungen eine Prozessverbesserung ermöglicht.

Die zuvor genannte Aufgabe wird erfindungsgemäß durch eine Orbitalschweißvorrichtung gemäß Anspruch 1 gelöst. Die erfindungsgemäße Schweißvorrichtung umfasst dabei bevorzugt mindestens ein Fahrwerk zum Ankoppeln der Schweißvorrichtung an einem Führungsband, wobei das Fahrwerk zumindest eine erste Rädergruppe und eine zweite Rädergruppe aufweist, wobei die erste Rädergruppe und die zweite Rädergruppe zumindest orthogonal zur Transportrichtung voneinander beabstandet sind, und wobei die erste Rädergruppe und die zweite Rädergruppe orthogonal zur Transportrichtung zumindest in zwei verschiedenen Relativpositionen zueinander anordenbar sind, eine Antriebseinrichtung zum Bewegen der Schweißvorrichtung gegenüber dem Führungsband, wobei die Antriebseinrichtung zumindest einen Motor und ein mit dem Führungsband in Kontakt bringbares Kraftübertragungselement aufweist, und eine Motorentkoppelungseinrichtung zum Umpositionieren mindestens eines Elements, insbesondere des Kraftübertragungselements, der Antriebseinrichtung, wobei durch die Motorentkoppelungseinrichtung in zumindest einer Relativposition zwischen der ersten Rädergruppe und der zweiten Rädergruppe, insbesondere in einem Betriebszustand, zumindest das eine Element der Antriebseinrichtung derart umpositionierbar ist, dass eine Bewegung der Schweißvorrichtung entlang dem Führungsband von einem Betrieb der Antriebseinrichtung entkoppelbar ist, insbesondere das Kraftübertragungselement vom Führungsband beabstandbar ist. Die Schweißvorrichtung ist bevorzugt bei an dem Führungsband angekoppeltem Fahrwerk gegenüber dem Führungsband verschiebbar, wobei zumindest ein Antriebselement der Antriebseinrichtung von einem Antriebsmotor der Antriebseinrichtung derart entkoppelbar ist, dass eine sich durch den Antriebsmotor infolge des Verschiebens der Schweißvorrichtung entlang dem Führungsband ergebende Momentenbeaufschlagung des Antriebselements reduzierbar, insbesondere vollständig aufhebbar, ist.

Ein Betriebszustand ist dabei ein Zustand, in dem die Rädergruppen so zueinander ausgerichtet bzw. positioniert sind, dass sie die Schweißvorrichtung am Führungsband halten bzw. halten würden. Als Nichtbetriebszustand wird ein Zustand verstanden, in dem die Rädergruppen des Fahrwerks derart zueinander positioniert sind, dass keine zum Schweißen ausreichende Kopplung zwischen der Schweißvorrichtung und einem Führungsband bestehen kann.

Diese Lösung ist vorteilhaft, da sie eine sehr schnelle und einfache Umpositionierung der Schweißvorrichtung am Führungsband ermöglicht. Durch das Entkoppeln der Antriebseinrichtung von dem Führungsband bei weiterhin am Führungsband angeordnetem Fahrwerk wird der Widerstand des Motors aufgehoben, wodurch die Schweißvorrichtung ohne eine gegen den Motor gerichtete Kraftaufbringung und ohne eine vollständige Entkoppelung der Schweißvorrichtung von dem Führungsband sicher und schnell umpositionierbar ist.

Weitere bevorzugte Ausführungsformen sind Gegenstand der nachfolgenden Beschreibungsanteile und/oder der Unteransprüche.

Gemäß einer bevorzugten Ausführungsform der vorliegenden Erfindung ist die Motorentkoppelungseinrichtung manuell auslösbar, wobei mittels der Motorentkoppelungseinrichtung die Antriebseinrichtung gegenüber dem Führungsband derart bewegbar ist, dass die Antriebseinrichtung, insbesondere das Kraftübertragungselement, aus einer das Führungsband kontaktierenden Stellung in eine zum Führungsband beabstandete Stellung überführbar ist bzw. aus einer ersten Position in eine zweite Position verschiebbar ist. Bevorzugt ist dabei am Rahmenteil oder im Bereich des Rahmenteils mindestens ein Betätigungselement zum Betätigen der Motorentkoppelungseinrichtung angeordnet. Besonders bevorzugt sind mehrere Betätigungselemente an voneinander beabstandeten Anteilen des Rahmenteils oder in voneinander beabstandeten Anteilen im Bereich des Rahmenteils ausgebildet. Dies ist vorteilhaft, da eine sehr einfache und ergonomisch angepasste Positionierung der Betätigungselemente möglich ist. Bevorzugt sind die Betätigungselemente als Druckknöpfe ausgestaltet.

Gemäß der vorliegenden Erfindung erstreckt sich die Längsrichtung der Schweißvorrichtung in Transportrichtung und erstreckt sich die Breitenrichtung der Schweißvorrichtung orthogonal zur Längsrichtung, insbesondere in axialer Richtung des Führungsbandes, wobei die Antriebseinrichtung orthogonal zur durch die Längsrichtung und Breitenrichtung aufgespannten Ebene oder in Breitenrichtung linear verschiebbar ist. Diese Ausführungsform ist vorteilhaft, da eine lineare Verstellbewegung bzw. ein Umpositionieren eines Elements der Antriebseinrichtung, insbesondere des Antriebsrads oder der gesamten Antriebseinrichtung, definiert und sicher bewirkbar ist.

Eine Halteeinrichtung, insbesondere eine Motorausrückhalterung, zum Positionieren der Antriebseinrichtung ist gemäß einer weiteren bevorzugten Ausführungsform der vorliegenden Erfindung vorgesehen, wobei die Halteeinrichtung gegenüber einem Fixteil beweglich angeordnet ist, wobei zwischen dem Fixteil und der Halteeinrichtung ein Federelement vorgesehen ist, wobei das Federelement derart angeordnet ist, dass es eine Kraft zum Positionieren der Halteeinrichtung in einer Stellung bereitstellt, in der die Antriebseinrichtung in dem Betriebszustand mit dem Führungsband zusammenwirken kann. Diese Ausführungsform ist vorteilhaft, da die Antriebseinrichtung mittels eines Federelements und somit mit einer sehr genau einstellbaren Anpresskraft an das Führungsband anpressbar ist, wodurch beim Einleiten einer gegensätzlich zur Federkraft gerichteten Kraft die Antriebseinrichtung entgegen der Federkraft umpositionierbar, insbesondere zusammen mit der Halteeinrichtung bevorzugt linear verschiebbar, ist. Es wird somit eine Möglichkeit zur Umpositionierung und zur federbelasteten Kopplung der Antriebseinrichtung mit dem Führungsband bereitgestellt.

Die Motorentkoppelungseinrichtung weist gemäß einer weiteren bevorzugten Ausführungsform der vorliegenden Erfindung einen Aktuator zum Umpositionieren der Halteeinrichtung auf, wobei der Aktuator derart ausgeführt ist, dass die Halteeinrichtung unter Stauchung des mindestens einen Federelements auslenkbar ist, wobei die Antriebseinrichtung durch das Umpositionieren der Halteeinrichtung ebenfalls umpositioniert wird, insbesondere ist die Antriebseinrichtung im Betriebszustand durch die Umpositionierung von dem Führungsband entkoppelbar. Diese Ausführungsform ist vorteilhaft, da der Aktuator derart gewählt werden kann, dass die zur Motorentkoppelung bzw. Motorausrückung erforderlichen Kräfte durch den Aktuator bereitgestellt werden.

Der Aktuator ist gemäß einer weiteren bevorzugten Ausführungsform der vorliegenden Erfindung bevorzugt als Magnetzylinder ausgeführt und mit einem an einem Schwenklager rotierbar gelagerten Hebelelement verbunden, wobei das Schwenklager beabstandet zu den Enden des Hebelelements (in Längsrichtung bzw. in der längsten Erstreckungsrichtung des Hebelelements) mit dem Hebelelement verbunden ist, wobei durch ein erstes Ende des Hebelelements und das Schwenklager ein erster Hebelanteil gebildet wird und durch das zweite Ende des Hebelelements und das Schwenklager ein zweiter Hebelanteil gebildet wird, wobei ein Hebelanteil länger ist als der andere Hebelanteil und wobei das erste Ende des Hebelelements mit dem Aktuator verbunden ist. Diese Ausführungsform ist vorteilhaft, da durch die Ausnutzung des Hebeleffekts die maximal durch den Aktuator bereitstellbare Kraft geringer sein kann, als wäre der Aktuator unmittelbar mit der Halteeinrichtung verbunden. Dies ermöglicht einen kleineren und somit leichteren Aktuator zu verwenden. Bevorzugt wird als Aktuator ein Linearmagnet, insbesondere ein Zylindermagnet, wie der Linearmagnet IST-LZ 3869 des Unternehmens Intertec Components GmbH eingesetzt.

Der Aktuator ist gemäß einer weiteren bevorzugten Ausführungsform der vorliegenden Erfindung durch die Betätigung eines der Betätigungselemente aktivierbar, wobei der Aktuator infolge der Aktivierung eine Auslenkung des Hebelelements bewirkt, wobei der zweite Hebelanteil mit der Halteeinrichtung und/oder der Antriebseinrichtung in Kontakt kommt und die Halteeinrichtung entgegen der Federkraft des Federelements verschiebt. Bevorzugt ist das Betätigungselement oder sind die Betätigungselemente derart ausgestaltet, dass sie infolge einer Betätigung ein Signal zum Auslösen des Aktuators erzeugen oder eine elektrische Energieübertragung zum Aktuator verändern, insbesondere erzeugen oder unterbrechen. Diese Ausführungsform ist vorteilhaft, da durch die Auslegung der Hebelanteile der Umpositionierweg, den die Halteeinrichtung durch das Hebelelement umpositioniert wird, präzise vorgebbar ist.

Eine An- und Abkoppelungseinrichtung zum Ankoppeln des Fahrwerks und der Antriebseinrichtung an das Führungsband und zum Abkoppeln des Fahrwerks und der Antriebseinrichtung von dem Führungsband ist gemäß einer weiteren bevorzugten Ausführungsform der vorliegenden Erfindung vorgesehen bzw. ausgebildet, wobei die An- und Abkoppelungseinrichtung eine Auslenkanordnung zum zeitgleichen Umpositionieren mindestens eines Elements der Antriebseinrichtung und mindestens eines Rades mindestens einer Rädergruppe des Fahrwerks aufweist. Diese Ausführungsform ist vorteilhaft, da die Antriebseinrichtung und das mindestens eine Rad einer Rädergruppe über einen weiteren Mechanismus umpositionierbar sind. Somit kann eine Umpositionierung der Antriebseinrichtung bzw. des Elements der Antriebseinrichtung gemäß dieser Ausführungsform auf mindestens zwei verschiedenen Wegen erfolgen. Zum Ersten damit die erfindungsgemäße Schweißvorrichtung an einem Führungsband angeordnet werden kann und zum Zweiten damit die erfindungsgemäße Schweißvorrichtung, wenn sie an dem Führungsband angeordnet ist, ohne Motorwiderstand bzw. ohne Widerstand durch die Antriebseinrichtung entlang dem Führungsband verschiebbar ist.

Die Verwendung der Wörter "im Wesentlichen" definiert bevorzugt in allen Fällen, in denen diese Wörter im Rahmen der vorliegenden Erfindung verwendet werden eine Abweichung im Bereich von 1%-30%, insbesondere von 1%-20%, insbesondere von 1%-10%, insbesondere von 1%-5%, insbesondere von 1%-2%, von der Festlegung, die ohne die Verwendung dieser Wörter gegeben wäre.

Weitere Vorteile, Ziele und Eigenschaften der vorliegenden Erfindung werden anhand nachfolgender Beschreibung anliegender Zeichnungen erläutert, in welchen beispielhaft die erfindungsgemäße Vorrichtung dargestellt ist. Bauteile oder Elemente der erfindungsgemäßen Vorrichtung, welche in den Figuren wenigstens im Wesentlichen hinsichtlich ihrer Funktion übereinstimmen, können hierbei mit gleichen Bezugszeichen gekennzeichnet sein, wobei diese Bauteile oder Elemente nicht in allen Figuren beziffert oder erläutert sein müssen.

Darin zeigen:
- Fig. 1: eine Draufsicht auf eine erfindungsgemäße Schweißvorrichtung in einem ersten Zustand, in dem die Antriebseinrichtung entgegen einer Rückstellkraft umpositioniert ist;
- Fig. 2: eine weitere Draufsicht auf eine erfindungsgemäße Schweißvorrichtung in einem zweiten Zustand, in dem die Antriebseinrichtung in einer Ausgangsposition angeordnet ist;
- Fig. 3a-3d: mehrere Ansichten der Schweißvorrichtung in dem ersten Zustand;
- Fig. 4a-4b: mehrere Ansichten der Schweißvorrichtung in dem zweiten Zustand;
- Fig. 5: eine perspektivische Ansicht einer An- und Abkoppelungseinrichtung;
- Fig. 6a-6b: zwei Seitenansichten der An- und Abkoppelungseinrichtung in voneinander verschiedenen Stellungen;
- Fig. 7a: ein Umpositionieren der Antriebseinrichtung mittels eines ersten Mechanismus;
- Fig. 7b: ein Umpositionieren der Antriebseinrichtung mittels eines zweiten Mechanismus;
- Fig. 8a-8d: mehrere Ansichten der mittels des zweiten Mechanismus bewirkten Umpositionierung der Antriebseinrichtung;
- Fig. 9: eine perspektivische Ansicht einer erfindungsgemäßen Schweißvorrichtung;
- Fig. 10: eine Frontalansicht der erfindungsgemäßen Schweißvorrichtung.

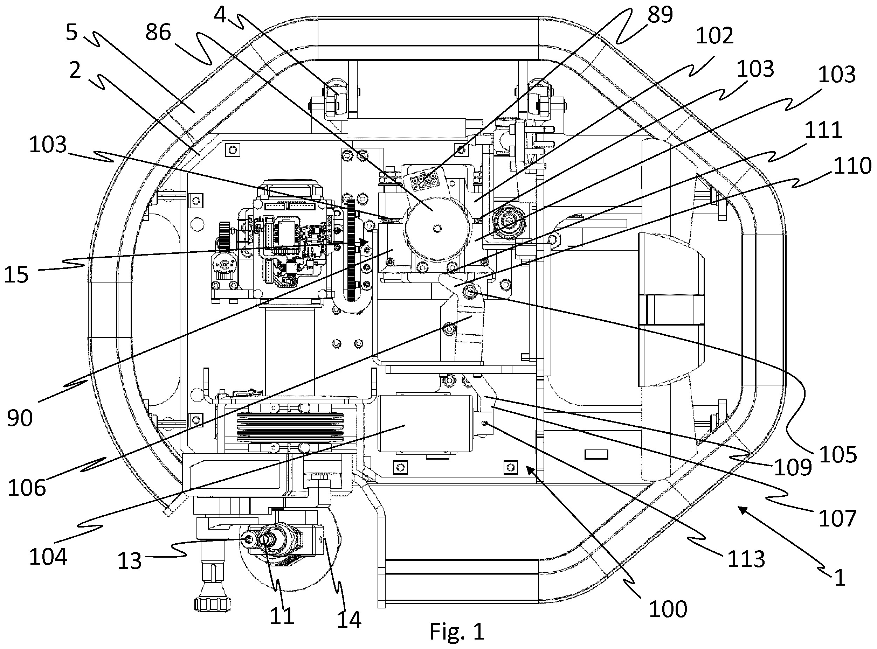

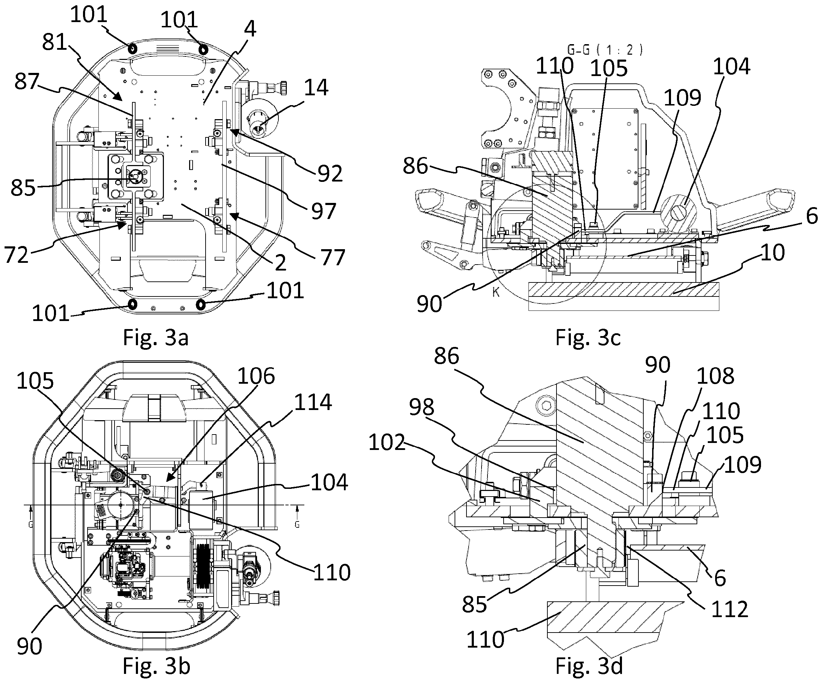

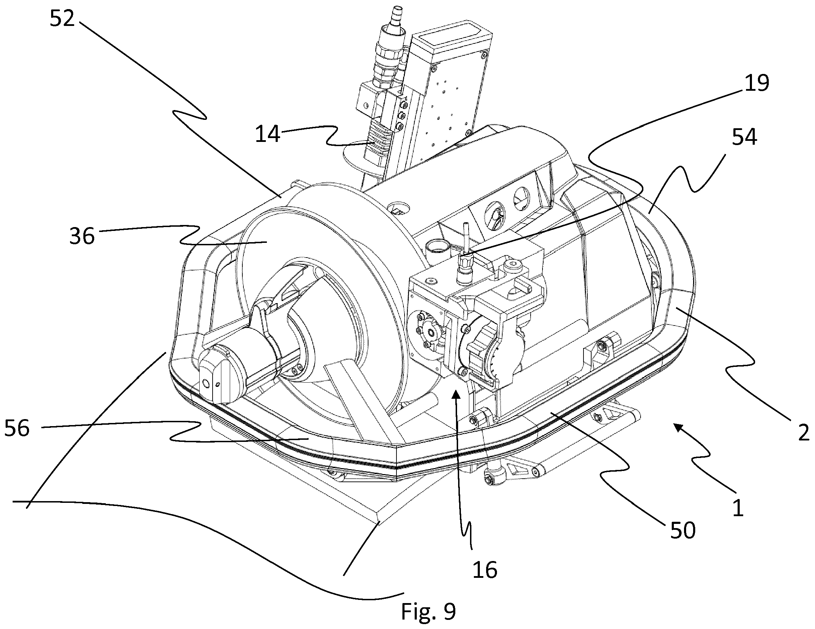

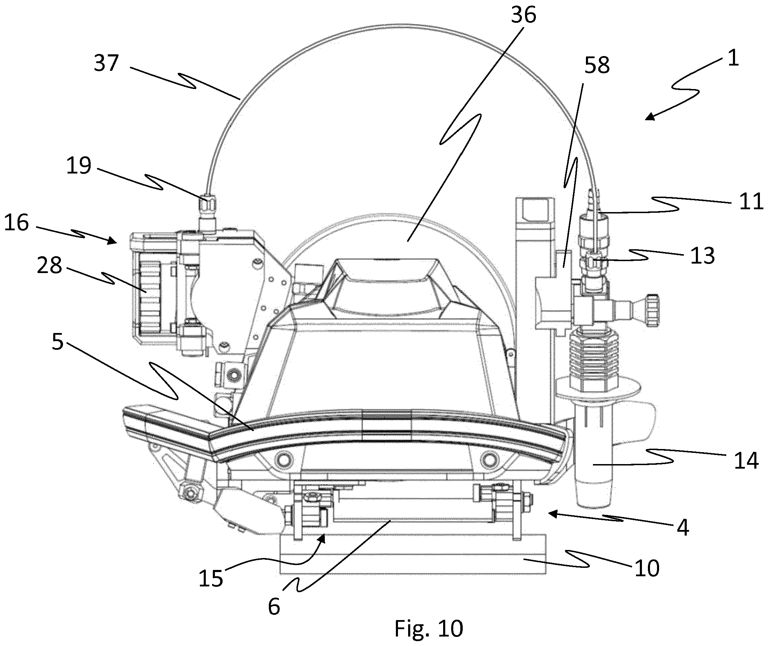

Fig. 1 zeigt eine erfindungsgemäße Schweißvorrichtung 1. Gemäß dieser Darstellung umfasst die erfindungsgemäße Schweißvorrichtung 1 bevorzugt ein Rahmenteil 2 zum Anordnen einer oder mehrerer Funktionseinrichtungen. Ferner weist die Schweißvorrichtung 1 ein nur teilweise dargestelltes Fahrwerk 4 zum Ankoppeln der Schweißvorrichtung 1 an einem Führungsband 6 (vgl. Fig. 9 und 10) auf, wobei das Führungsband 6 bevorzugt an einem Rohr 10 (vgl. Fig. 9 und 10) befestigt ist, wobei das Führungsband 6 das Rohr 10 in Umfangsrichtung umschließt und sich das Führungsband 6 derart in axialer Richtung erstreckt, dass es das Rohr 10 zumindest abschnittsweise in Rohrlängsrichtung überlagert. Ferner ist bevorzugt eine Anschlusseinrichtung 11 zum Anschließen von mindestens einer Zuführleitung vorgesehen, wobei einem über die Anschlusseinrichtung 11 mit der Zuführleitung verbundener Schweißkopf 14 bevorzugt über die Zuführleitung ein Schweißgas zuführbar ist. Weiterhin umfasst die erfindungsgemäße Schweißvorrichtung 1 eine Antriebseinrichtung 15 zum Bewegen der Schweißvorrichtung 1 gegenüber dem Führungsband 6, wobei die Antriebseinrichtung 15 zumindest einen Motor 86 und ein mit dem Führungsband 6 in Kontakt bringbares Kraftübertragungselement 85 (vgl. Fig. 3) aufweist. Eine Motorentkoppelungseinrichtung ist durch das Bezugszeichen 100 gekennzeichnet und dient zum Umpositionieren mindestens eines Elements, insbesondere des Kraftübertragungselements 85, der Antriebseinrichtung 15. In einem Betriebszustand, in dem das Fahrwerk 4 an dem Führungsband 6 angekoppelt ist und in dem die Antriebseinrichtung 15 mit dem Führungsband 6 zusammenwirkt, ist mittels der Motorentkoppelungseinrichtung 100 zumindest das eine Element 85 der Antriebseinrichtung 15 derart umpositionierbar, dass eine Bewegung der Schweißvorrichtung 1 entlang dem Führungsband 6 von einem Betrieb der Antriebseinrichtung 15 entkoppelbar ist bzw. das mindestens eine Element 85 der Antriebseinrichtung 15 bei an dem Führungsband 6 angekoppeltem Fahrwerk 4 mittels der Motorentkoppelungseinrichtung 100 gegenüber dem Führungsband 6 aus der kontaktierenden Stellung in eine zum Führungsband 6 beabstandete Stellung überführbar ist.

Der Motor bzw. Antriebsmotor 86 wird gemäß dieser Darstellung durch eine Halteeinrichtung 90 gehalten bzw. aufgenommen. Die Halteeinrichtung 90 ist beweglich gelagert und gegenüber einem Fixteil 102 verschiebbar. Bevorzugt sind zwischen dem Fixteil 102 und der Halteeinrichtungen 90 ein oder mehrere Federelemente 103, insbesondere Spiralfedern, angeordnet. Das oder die Federelement/e 103 werden bei einer Umpositionierung der Halteeinrichtung 90 gegenüber dem Fixteil 102 bevorzugt komprimiert bzw. gestaucht. Das Bezugszeichen 111 kennzeichnet eine Kontaktstelle oder einen Kontaktbereich, in dem das Hebelelement 106 mit der Halteeinrichtung 90 und/oder der Antriebseinrichtung 15 in Kontakt bringbar ist. Das Hebelelement 106 ist dabei bevorzugt rotierend bzw. schwenkend über ein Rotations- bzw. Schwenklager 105 mit dem Rahmenteil 2 verbunden. Einerseits des Schwenklagers 105 bildet das Hebelelement 106 einen ersten Hebelanteil 109 aus und andererseits der Schwenklagers 105 bildet das Hebelelement 106 einen zweiten Hebelanteil 110 aus. Der erste Hebelanteil 109 ist dabei bevorzugt länger als der zweite Hebelanteil 110 und mit einem Aktuator 104 über eine Verbindungsstelle 113 gekoppelt. Bevorzugt befindet sich die Verbindungsstelle 113 an einem linear verschiebbaren Hubelement des Aktuators 104. Der zweite Hebelanteil 110 ist derart ausgebildet, dass er zumindest in einer bestimmten Stellung mit der Antriebseinrichtung 15 und/oder der Halteeinrichtung 90 kontaktierend zusammenwirkt. Die gezeigte Anordnung stellt einen Zustand dar, in dem das Hebelelement 106 derart ausgerichtet ist, dass der zweite Hebelanteil 110 des Hebelelements 106 die Halteeinrichtung 90 bzw. die Antriebseinrichtung 15 in eine die oder das Federelement/e 103 komprimierende Stellung auslenkt.

Weiterhin kennzeichnet das Bezugszeichen 89 ein Steckerelement bzw. einen Datenstecker der Antriebseinrichtung 15. Bevorzugt sind Ansteuerungsdaten von einer Steuerungseinrichtung über das Steckerelement auf der Antriebseinrichtung 15 zum Verändern von Betriebsparametern zuführbar. Es ist den Figuren zu entnehmen, dass das Steckerelement 89 an verschiedenen Positionen angeordnet sein kann, wobei die unterschiedlich dargestellten Positionen bzw. Ausrichtungen rein beispielhaft gewählt sind.

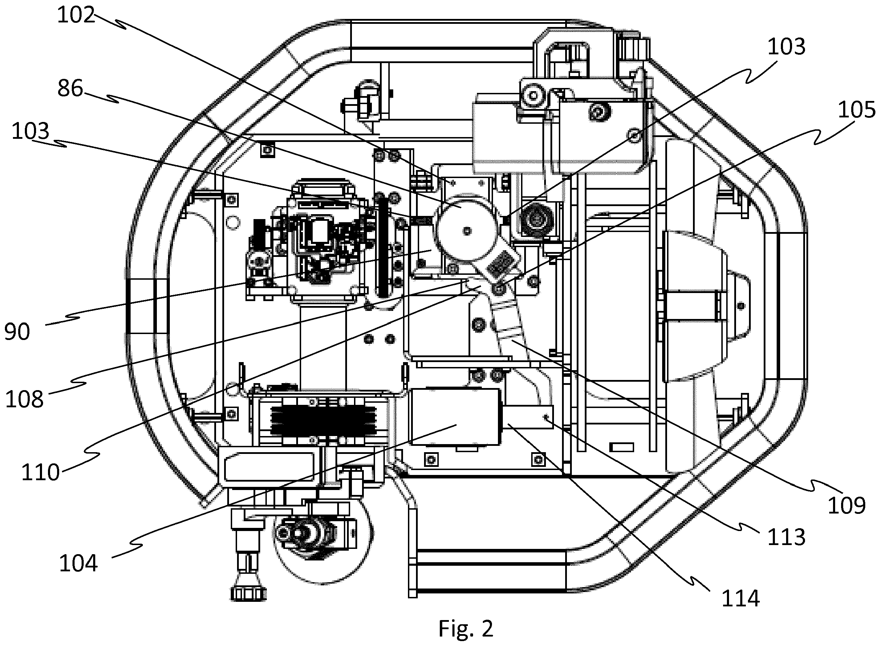

Fig. 2 zeigt einen Zustand, gemäß dem der zweite Hebelanteil 110 von der Halteeinrichtung 90 und/oder der Antriebseinrichtung 15 beabstandet ist. Ferner ist ersichtlich, dass das Hubelement bzw. Verfahrteil 114 des Aktuators 104 gegenüber der in Fig. 1 gezeigten eingefahrenen Stellung in einer ausgefahrenen Stellung angeordnet ist. Die Federelemente 103 bewirken hierbei eine Rückstellung der Halteeinrichtung 90 und damit eine Rückstellung der Antriebseinrichtung 15 in eine zum Fixteil 102 weiter beabstandete Stellung.

Es ist somit ersichtlich, dass die Halteeinrichtung 90 bevorzugt mittels der Federelemente 103 in eine Ausgangsposition überführt wird, wenn der zweite Hebelanteil 110 zur Halteeinrichtung 90, insbesondere zur Kontaktstelle 111 bzw. dem Kontaktbereich, beabstandet ist. Die Antriebseinrichtung 15 zum Bewegen der Schweißvorrichtung 1 ist somit mittels der Federelemente 103 zurück in eine mit dem Führungsband 6 kontaktierende Stellung überführbar.

Fig. 3a zeigt eine Draufsicht auf die Unterseite der erfindungsgemäßen Schweißvorrichtung 1. Das Bezugszeichen 101 kennzeichnet hierbei mehrere Betätigungselemente, die bevorzugt an einer Unterseite eines Halterahmens 5 zum Halten der Schweißvorrichtung 1 durch eine Person, angeordnet sind.

Das Fahrwerk 4, das gemäß dieser Darstellungen die vier Rädergruppen 72, 77, 81 und 92 umfasst, befindet sich in einer Stellung, in der es, wenn die Schweißvorrichtung 1 mit einem Führungsband 6 gekoppelt ist, eine sichere Anbindung der Schweißvorrichtung 1 an das Führungsband 6 bewirkt. Weiterhin kann dieser Darstellung entnommen werden, dass mindestens ein Element 85 der Antriebseinrichtung 15, insbesondere der Antriebsmotor 86 oder der Antriebsmotor 86 mit daran angeordnetem Antriebsrad 85, gegenüber der Leit-Stütz-Struktur 87 umpositioniert ist. Die Leit-Stütz-Struktur 87 kann hierbei als ein erstes Fahrwerksteil angesehen werden, das eine oder mehrere Rädergruppen 72, 81 aufnimmt. Weiterhin werden die zweite Rädergruppe 77 und bevorzugt die vierte Rädergruppe 92 durch ein zweites Fahrwerksteil 97 gelagert. Besonders bevorzugt ist das zweite Fahrwerksteil 97 ortsfest gegenüber dem Rahmenteil 2 der Schweißvorrichtung 1 angeordnet und der erste Fahrwerksteil 87 ist bevorzugt gegenüber dem ersten Fahrwerksteil 97 umpositionierbar, insbesondere in verschiedenen Abständen dazu anordenbar. Eine Umpositionierung des ersten Fahrwerkteils 87 gegenüber dem zweiten Fahrwerkteil 97 erfolgt hierbei bevorzugt in einer linearen Bewegung.

Fig. 3b zeigt eine Draufsicht auf die erfindungsgemäße Schweißvorrichtung 1. Die Schweißvorrichtung 1 befindet sich in demselben Zustand, wie in Fig. 3a. Es kann dieser Darstellung entnommen werden, dass der Aktuator 104 über das Hubelement 114 das Hebelelement 106 derart um die Schwenkachse 105 schwenkt, dass der zweite Hebelanteil 110 die Halteeinrichtung 90 gegenüber dem zweiten Fahrwerksteil 87 in einer weiter beabstandeten Position, insbesondere in einer die Federelemente 103 stärker komprimierenden Position, hält.

Fig. 3c zeigt eine Schnittdarstellung entlang dem in Fig. 3b mit G-G gekennzeichneten Schnitt. Es lässt sich dieser Darstellung entnehmen, dass der zweite Hebelanteil 110 an der Halteeinrichtung 90 anliegt. Weiterhin ist das Fahrwerk 4 der Schweißvorrichtung 1 mit einem um ein Rohr 10 herum angeordneten Führungsband 6 verbunden.

Fig. 3d zeigt eine Detaildarstellung des in Fig. 3c mit einem Kreis und dem Buchstaben K gekennzeichneten Bereichs. Es ist ersichtlich, dass das Antriebsrad 85 gegenüber einer Stirnfläche des Führungsbandes 6 um einen Abstand 112 beabstandet ist. Die entsprechend dem Abstand 112 erfolgte Auslenkung der Antriebseinrichtung 15 resultiert aus der durch den zweiten Hebelanteil 110 bewirkten Auslenkung der Halteeinrichtung 90.

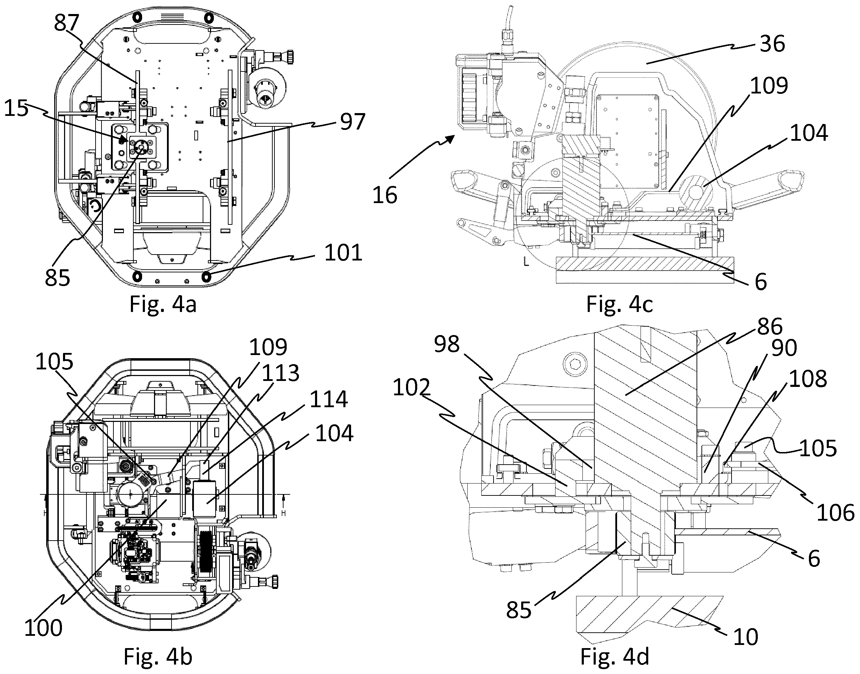

Fig. 4a zeigt eine Draufsicht auf eine Unterseite der erfindungsgemäßen Schweißvorrichtung 1. Das Fahrwerk 4, das gemäß dieser Darstellungen die vier Rädergruppen 72, 77, 81 und 92 umfasst, befindet sich in einer Stellung, in der es, wenn die Schweißvorrichtung 1 mit einem Führungsband 6 gekoppelt ist, eine sichere Anbindung der Schweißvorrichtung 1 an das Führungsband 6 bewirkt. Gegenüber dem in den Figuren 3a-3d gezeigten Zustand befindet sich die Antriebseinrichtung 15 in einer durch die Motorentkoppelungseinrichtung 100 nicht ausgelenkten Position und somit näher zu dem zweiten Fahrwerksteil 97 beabstandet.

Fig. 4b zeigt, dass das Hubelement 114 des Aktuators 104 derart verfahren ist, dass der erste Hebelanteil 110 von der Halteeinrichtung 90 beabstandet ist oder ohne die Federelemente 103 auszulenken an der Halteeinrichtung 90 anliegt.

Fig. 4c zeigt eine Schnittdarstellung gemäß dem in Fig. 4b mit H-H gekennzeichneten Schnitt. Es kann dieser Darstellung entnommen werden, dass die Rädergruppen des Fahrwerks 4 zum Bewegen der Schweißvorrichtung 1 entlang des Führungsbandes 6 an dem Führungsband 6 angeordnet sind.

Fig. 4d zeigt eine Detaildarstellung des in Fig. 4c mit einem Kreis und dem Buchstaben L gekennzeichneten Bereichs. Es ist ersichtlich, dass das Antriebsrad 85 der Antriebseinrichtung 15 mit der Stirnseite des Führungsbandes 6 in Kontakt steht. Eine Rotation des Antriebsrades 85 bewirkt aufgrund des Kontakts mit dem Führungsband 6 eine Umpositionierung der Schweißvorrichtung 1 entlang dem Führungsband 6. Weiterhin zeigt Fig. 4d, dass das zweite Ende 108 des Hebelelements 106 gegenüber der Halteeinrichtung 90 beabstandet ist. Die Antriebseinrichtung 15, insbesondere das Antriebsrad 85, wird somit besonders bevorzugt mittels der Federelemente 103 an das Führungsband 6 angepresst. Das Führungsband 6, insbesondere die Stirnseite des Führungsbandes 6, und das Antriebsrad 85 sind bevorzugt korrespondierend zueinander ausgebildet, insbesondere weisen beide eine zähneartige Gestalt auf.

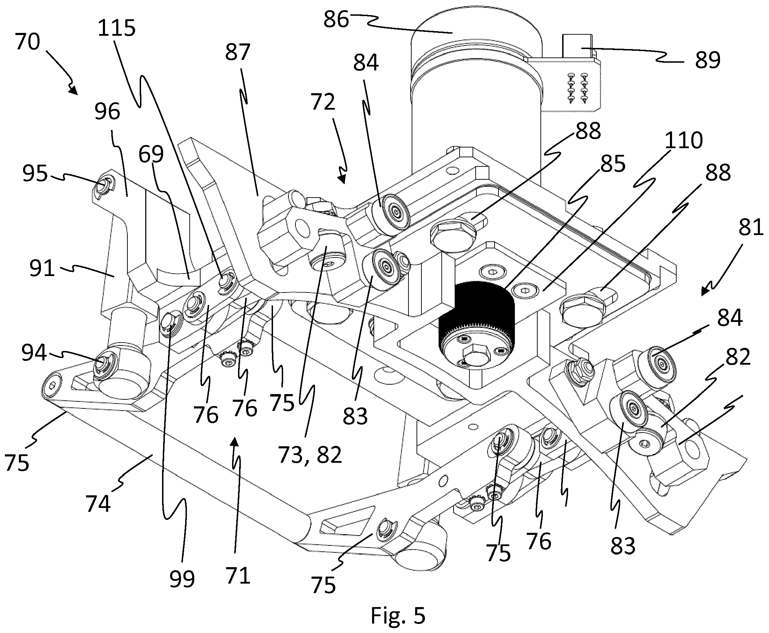

Fig. 5 zeigt weitere Elemente des zum Umpositionieren der Leit-Stütz-Struktur 87 bevorzugt eingesetzten Hebelmechanismus. Es ist ersichtlich, dass an beiden Seiten des Griffteils 74 ein Anteil 75 des Hebelmechanismus 71 ausgebildet ist. Es ist jedoch ebenfalls im Sinne der vorliegenden Erfindung, dass der Hebelmechanismus nur einen dieser Anteile 75 oder mehr als zwei dieser Anteile 75 aufweist. Weiterhin ist denkbar, dass ein Anteil 75 nicht an einem Ende des Griffteils 74 angeordnet ist, sondern zwischen den Enden, insbesondere in der Mitte, des Griffteils 74 angeordnet ist. Im dargestellten Fall ist an dem Griffteil 74 beiderseits ein formstabiles Kraftübertragungselement 75 angeordnet, das bevorzugt über eine unterseitige Lagerung 94 eines Hubelements 91 mit dem Hubelement 91 verbunden ist. Das Hubelement 91 bewirkt zusammen mit der Schwenklagerung 99, durch die das Kraftübertragungselement 75 schwenkbar am Grundkörper 69 angeordnet ist, eine Begrenzung der Schwenkbewegung. Ein vom Griffteil 74 beabstandetes Ende des Kraftübertragungselements 75 ist bevorzugt mit zwei Mitteln zum Transferieren der Schwenkbewegung in eine Linearbewegung 76 gekoppelt. Eines der Mittel zum Transferieren der Schwenkbewegung in eine Linearbewegung 76 ist dabei einerseits bevorzugt mit dem Grundkörper 69 verbunden und das andere Mittel zum Transferieren der Schwenkbewegung in eine Linearbewegung 76 ist bevorzugt mit einem Ende mit der Leit-Stütz-Struktur 74 verbunden. Weiterhin sind die Mittel zum Transferieren der Schwenkbewegung in eine Linearbewegung 76 bevorzugt derart mit dem Kraftübertragungselement 75 gekoppelt, dass eine Bewegung des Kraftübertragungselements 75 in eine Bewegung der Mittel zum Transferieren der Schwenkbewegung in eine Linearbewegung 76 umsetzbar ist. Die Mittel zum Transferieren der Schwenkbewegung in eine Linearbewegung 76 und das Kraftübertragungselement 75 bilden in ihrer Gesamtheit somit eine Auslenkeinrichtung 71, insbesondere zur Umsetzung einer Kniehebelmechanik, aus.

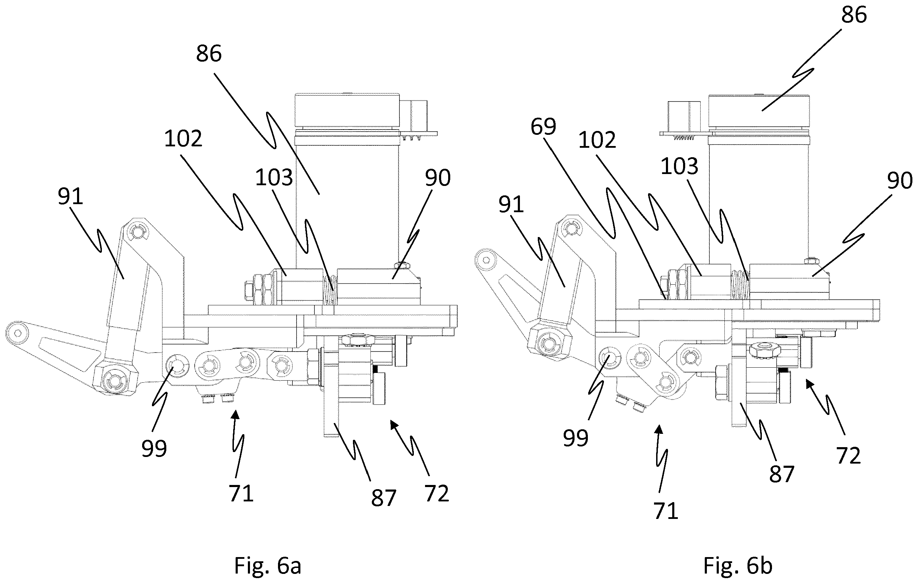

Weiterhin zeigt diese Darstellung, dass das Hubelement 91 über ein oberseitiges Lager 95 mit einer an dem Grundkörper 69 ausgebildeten vorrichtungsfesten Leit-Stütz-Struktur 96 angeordnet ist. Das Hubelement 91 ist in dem gezeigten Zustand eingefahren. Dies ist vorteilhaft, da die Hebelverhältnisse zur Auslenkung der Leit-Stütz-Struktur 87 gegenüber den Hebelverhältnissen im in Fig. 6b gezeigten Zustand verändert sind. Die Mittel zum Transferieren der Schwenkbewegung in eine Linearbewegung 76 sind in dem gezeigten Zustand bevorzugt stärker zueinander geneigt als in dem in Fig. 6a gezeigten Zustand. Bevorzugt sind die Mittel zum Transferieren der Schwenkbewegung in eine Linearbewegung 76 über eine Verbindungsstelle 115 oder im Bereich einer Verbindungsstelle 115 miteinander gekoppelt.

Die beiden Rädergruppen 72 und 81 weisen bevorzugt jeweils drei Räder oder Rollen auf, wobei die Rolle 83 jeweils zum unterseitigen Kontaktieren des Führungsbandes 6 angeordnet ist und die Rolle 84 jeweils zum oberseitigen Kontaktieren des Führungsbandes 6 angeordnet ist und die Rolle 82 jeweils zum Kontaktieren der Frontseite bzw. Stirnseite des Führungsbandes 6 angeordnet ist. Die Bezugs

Fig. 6a ist eine Seitenansicht der in Fig. 5 gezeigten Darstellung gezeigt. Durch die maximale Ausfahrbewegung des Hubelements 91 und die Schwenkachse 99 erfolgt eine Begrenzung der Schwenkbewegung des Kraftübertagungselements 75. Dies ist vorteilhaft, da zum einen ein maximaler Verschiebeweg der Leit-Stütz-Struktur 87 begrenzt wird, wodurch z.B. das Antriebsrad 85 nur begrenzt an das Führungsband 6 anpressbar ist, und zum anderen die Mittel zum Transferieren der Schwenkbewegung in eine Linearbewegung 76 vor Beschädigungen geschützt werden.

Fig. 6b zeigt eine Seitenansicht der An- und Abkoppelungseinrichtung 70 in einem abgekoppelten Zustand. Es lässt sich dieser Darstellung entnehmen, dass durch die maximale Einfahrbewegung des Hubelements 91 und die Schwenklagerung 99 die maximale Auslenkung des Kraftübertragungselements 75 und dadurch ebenfalls die Verschiebebewegung der Leit-Stütz-Struktur 87 begrenzt wird.

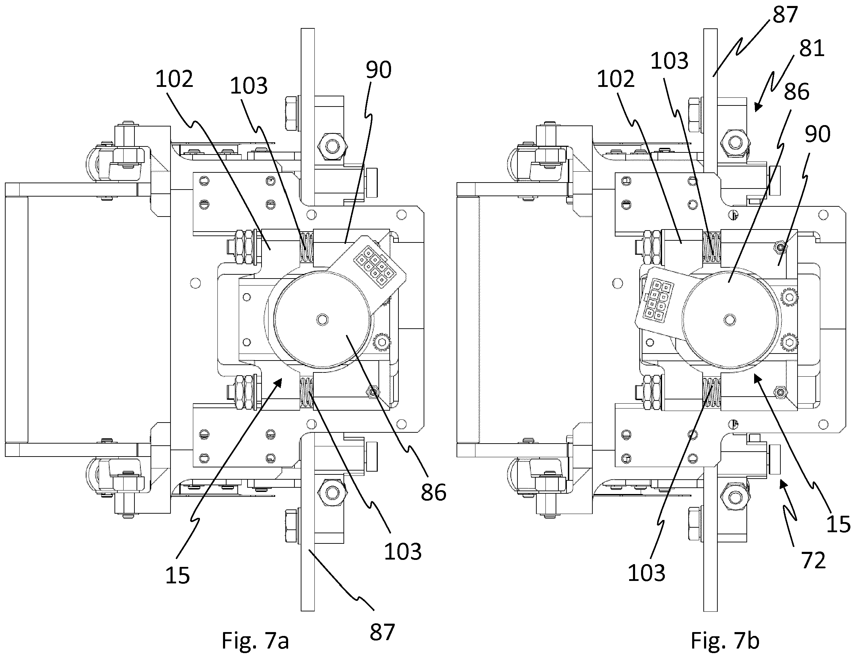

Fig. 7a zeigt einen Zustand, in dem die Antriebseinrichtung 15 mittels der Motorentkoppelungseinrichtung 100 und somit entgegen der Federelemente 103 bzw. unter Komprimierung der Federelemente 103 umpositioniert ist.

Fig. 7b zeigt einen Zustand, gemäß dem die Antriebseinrichtung 15 mittels der An- und Abkoppelungseinrichtung 70 umpositioniert ist, wobei eine Betätigung der An- und Abkoppelungseinrichtung 70 eine Umpositionierung der Leit-Stütz-Struktur 87 umfasst, wodurch auch ein oder mehrere Räder der ersten Rädergruppe 72 und/oder der dritten Rädergruppe 81 oder die gesamte erste Rädergruppe 72 und/oder die gesamte dritte Rädergruppe 81 umpositioniert werden.

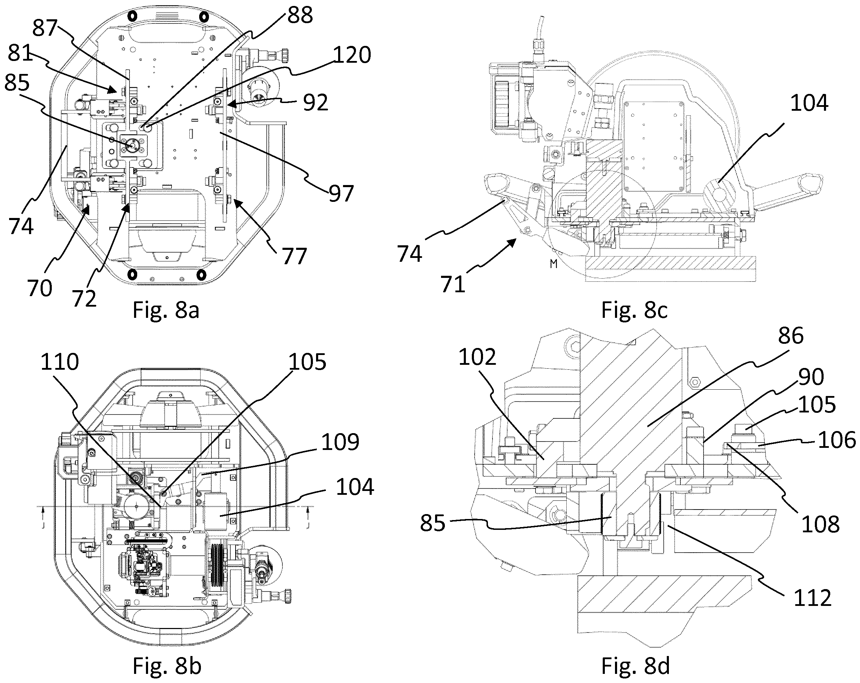

Fig. 8a zeigt eine Draufsicht auf eine Unterseite der erfindungsgemäßen Schweißvorrichtung 1. Es kann dieser Darstellung z.B. durch die Stellung des Griffteils 74 entnommen werden, dass die An- und Abkoppelungseinrichtung 70 in eine ausgerückte Stellung überführt ist. In dieser Stellung ist die erfindungsgemäße Schweißvorrichtung 1 an einem Führungsband 6 anbringbar oder von einem Führungsband 6 entfernbar. Die Leit-Stütz-Struktur 87 bzw. der erste Fahrwerksteil und damit die Antriebseinrichtung 15 bzw. zumindest ein Element 85 der Antriebseinrichtung 15 ist gegenüber dem zweiten Fahrwerksteil in dieser Stellung weiter entfernt beabstandet, als z.B. in einer mit dem Führungsband 6 gekoppelten Stellung. Weiterhin ist dieser Darstellung zu entnehmen, dass das Element 85 der Antriebseinrichtung 15 bzw. die Antriebseinrichtung 15 nicht gegenüber der Leit-Stütz-Struktur 87 bzw. dem ersten Fahrwerksteil beabstandet ist. Es liegt gemäß dieser Darstellung somit lediglich eine Umpositionierung des Elements 85 der Antriebseinrichtung bzw. der Antriebseinrichtung 15 in Abhängigkeit einer Betätigung der An- und Abkoppelungseinrichtung 70 vor und nicht der Motorentkoppelungseinrichtung 100. Ferner ist durch die Ausrichtung der Führungselemente 88, insbesondere Langlöcher 88, zu den darin angeordneten zapfenartigen Elementen 120, insbesondere Schrauben, erkennbar, dass die Leit-Stütz-Struktur 87 von dem zweiten Fahrwerkteil 97 beabstandet ist.

Fig. 8b zeigt, dass die Motorentkoppelungseinrichtung 100 in einer Stellung angeordnet ist, in welcher der zweite Hebelanteil 110 nicht mit der Halteeinrichtung 90 zusammenwirken kann. Ferner ist die Halteeinrichtung 90 ohnehin mittels der Leit-Stütz-Struktur 87 derart umpositioniert, dass durch das Hebelelement 106 wegmäßig keine oder nur eine deutlich reduzierte Umpositionierung der Halteeinrichtung 90 bewirkbar ist. Bevorzugt ist die Motorentkoppelungseinrichtung 100 im Bereich zwischen den das Fahrwerk 4 bildenden Rädern angeordnet.

Fig. 8c zeigt eine Schnittdarstellung gemäß dem in Fig. 8b mit J-J gekennzeichneten Schnitt. Es ist dieser Darstellung zu entnehmen, dass das Griffteil 74 der An- und Abkoppelungseinrichtung 70 in eine Endstellung bewegt ist.

Fig. 8d zeigt eine Detaildarstellung des in Fig. 8c mit einem Kreis und dem Buchstaben M gekennzeichneten Bereichs. Diese Darstellung zeigt, dass das zweite Ende des Hebelelements 106 von der Halteeinrichtung 90 beabstandet ist und zudem das Antriebsrad 85 von dem Führungsband 6 beabstandet ist. Die Antriebseinrichtung 15 ist somit besonders bevorzugt mittels zumindest zwei unterschiedlicher Mechanismen umpositionierbar.

Fig. 9 zeigt eine perspektivische Ansicht einer erfindungsgemäßen Orbitalschweißvorrichtung 1 mit einer erfindungsgemäßen Drahtvorschubeinrichtung 16. Die erfindungsgemäße Drahtbevorratungseinrichtung 16 ist dabei bevorzugt derart angeordnet, dass die Rotationsachse der Drahtbevorratungseinrichtung 36 und der Welle 42 parallel oder im Wesentlichen parallel zueinander ausgerichtet sind. Ferner kennzeichnet das Bezugszeichen 50 einen ersten seitlichen Rahmenanteil und das Bezugszeichen 52 einen zweiten seitlichen Rahmenanteil eine Rahmens 5 der Schweißvorrichtung 1. Das Bezugszeichen 54 kennzeichnet ferner ein erstes Ende der Schweißvorrichtung 1 in Längsrichtung und das Bezugszeichen 56 kennzeichnet ein zweites Ende der Schweißvorrichtung 1 in Längsrichtung, insbesondere in Transportrichtung. Der auf der Drahtbevorratungseinrichtung 36 als Endlosmaterial vorgesehene Schweißdraht 12 wird unterseitig der Drahtvorschubeinrichtung 16 in die Drahtvorschubeinrichtung 16 eingeführt und oberseitig der Drahtvorschubeinrichtung 16 aus der Drahtborschubeinrichtung 16 ausgeleitet. Bevorzugt wird der aus der Drahtvorschubeinrichtung 16 ausgeleitete Schweißdraht 12 über ein Verbindungselement 19 in eine Leitungselement 37 eingebracht, das mit einem weiteren Ende an dem Schweißkopf 14 angeordnet ist. Der Schweißdraht 12 wird somit über eine Gehäuseabdeckung 3 der Schweißvorrichtung 1 hinweg zum Schweißkopf 14 geführt.

Fig. 10 zeigt die erfindungsgemäße Orbitalschweißvorrichtung 1, die an einem um ein Rohr 10 herum angeordnetes Führungsband 6 angeordnet ist. Die Orbitalschweißvorrichtung 1 weist dabei eine mit dem Führungsband 6 in Kontakt bringbare Antriebseinrichtung 15 auf. Die Antriebseinrichtung 15 weist bevorzugt einen Motor und ein von dem Motor angetriebenes Rad, insbesondere Zahnrad, auf, das mit dem Führungsband 6 zum Bewegen der Schweißvorrichtung 1 kraft- und/oder formschlüssig in Kontakt bringbar ist. Bevorzugt erstreckt sich die Rotationsachse der Antriebseinrichtung 15, wenn es an dem um das Rohr 10 angeordneten Führungsband 6 angekoppelt ist, in radialer Richtung des Rohres 10. Weiterhin kennzeichnet das Bezugszeichen 4 bevorzugt ein Fahrwerk der Orbitalschweißvorrichtung 1. Das Fahrwerk 4 weist bevorzugt zumindest zwei Rädergruppen mit jeweils mindestens zwei Rädern auf, wobei ein Rad je Rädergruppe bevorzugt derart angeordnet ist, dass es mit der Unterseite des Führungsbandes 6 in Kontakt bringbar ist und ein zweites Rad der Rädergruppe derart angeordnet ist, dass es zeitgleich, wenn das erste Rad mit der Unterseite des Führungsbandes 6 in Kontakt steht, mit der Stirnseite des Führungsbandes 6 oder mit der Oberseite des Führungsbandes 6 in Kontakt steht. Weiterhin weist der Schweißkopf eine weitere Anschlusseinrichtung 13 auf, mittels der das Leitungselement 37 mit dem Schweißkopf 14 koppelbar ist. Ferner ist am Schweißkopf 14 bevorzugt eine Anschlusseinrichtung 11 zum Anschließen einer Fluidversorgungsleitung, insbesondere einer Gasleitung. Das Bezugszeichen 58 kennzeichnet eine Antriebseinrichtung bzw. Bewegungseinrichtung, mittels welcher der Schweißkopf 14 zumindest in einer Richtung rotiert oder verfahrbar ist.

Somit bezieht sich die vorliegende Erfindung bevorzugt auf eine Schweißvorrichtung 1. Die erfindungsgemäße Schweißvorrichtung weist hierbei mindestens ein Fahrwerk 4 zum Ankoppeln der Schweißvorrichtung 1 an einem Führungsband 6, wobei das Fahrwerk 4 zumindest eine erste Rädergruppe 72 und eine zweite Rädergruppe 77 aufweist, wobei die erste Rädergruppe 72 und die zweite Rädergruppe 77 zumindest orthogonal zur Transportrichtung voneinander beabstandet sind, und wobei die erste Rädergruppe 72 und die zweite Rädergruppe 77 orthogonal zur Transportrichtung zumindest in zwei verschiedenen Relativpositionen zueinander anordenbar sind. Das Führungsband ist nicht Teil der Schweißvorrichtung 1, sondern wird lediglich als Referenz zum Erläutern der Funktionalität der erfindungsgemäßen Schweißvorrichtung herangezogen.

Ferner umfasst die erfindungsgemäße Schweißvorrichtung bevorzugt eine Antriebseinrichtung 15 zum Bewegen der Schweißvorrichtung 1 gegenüber dem Führungsband 6, wobei die Antriebseinrichtung 15 zumindest einen Motor 86 und ein mit dem Führungsband 6 in Kontakt bringbares Kraftübertragungselement 85 aufweist. Weiterhin umfasst die erfindungsgemäße Vorrichtung bevorzugt eine Motorentkoppelungseinrichtung 100 zum Umpositionieren mindestens eines Elements, insbesondere des Kraftübertragungselements 85, der Antriebseinrichtung 15. Bevorzugt ist durch die Motorentkoppelungseinrichtung 100 in zumindest einer Relativposition zwischen der ersten Rädergruppe 72 und der zweiten Rädergruppe 77, insbesondere in einem Betriebszustand, zumindest das eine Element der Antriebseinrichtung 15 derart umpositionierbar, dass eine Bewegung der Schweißvorrichtung 1 entlang dem Führungsband 6 von einem Betrieb der Antriebseinrichtung 15 entkoppelbar ist, insbesondere das Kraftübertragungselement 100 vom Führungsband 6 beabstandet ist.

Erfindungsgemäß erstreckt sich die Längsrichtung der Schweißvorrichtung 1 in Transportrichtung und die Breitenrichtung der Schweißvorrichtung 1 erstreckt sich orthogonal zur Längsrichtung des Führungsbandes 6, wobei die Antriebseinrichtung 15 in Breitenrichtung F linear verschiebbar gelagert ist. Ferner ist eine An- und Abkoppelungseinrichtung 70 zum Ankoppeln des Fahrwerks 4 und der Antriebseinrichtung 15 an das Führungsband 6 und zum Abkoppeln des Fahrwerks 4 und der Antriebseinrichtung 15 von dem Führungsband 6 vorgesehen. Die An- und Abkoppelungseinrichtung 7 weist eine Auslenkanordnung 71 zum zeitgleichen Umpositionieren mindestens eines Elements der Antriebseinrichtung 15 und mindestens eines Rades 73 mindestens einer Rädergruppe des Fahrwerks 4 auf.

Bevorzugt ist eine Führungseinrichtung zum Vorgeben eines linearen Verschiebewegs der Antriebseinrichtung in Breitenrichtung vorgesehen. Weiterhin ist denkbar, dass die Motorentkoppelungseinrichtung manuell auslösbar ist.

Besonders bevorzugt ist mittels der Motorentkoppelungseinrichtung 100 die Antriebseinrichtung 15 gegenüber dem Führungsband 6 und der An- und Abkoppelungseinrichtung bewegbar. Somit kann die Antriebseinrichtung mittels der An- und Abkoppelungseinrichtung und mittels der Motorentkoppelungseinrichtung ausgelenkt bzw. umpositioniert werden. Ist die Schweißvorrichtung mit einem Führungsband über das Fahrwerk gekoppelt, so lässt sich durch eine Betätigung der Motorentkoppelungseinrichtung die Antriebseinrichtung oder mindestens ein Teil der Antriebseinrichtung gegenüber der An- und Abkoppelungseinrichtung bewegen, insbesondere linear verschieben. Dies bewirkt, dass der Wiederstand des Motors aufgehoben wird und die Schweißvorrichtung entlang dem Führungsband verschoben werden kann. Wird die Schweißvorrichtung jedoch vom Führungsband genommen, so wird die An- und Abkoppelungseinrichtung betätigt, durch die ebenfalls ein Umpositionieren bzw. Bewegen der Antriebseinrichtung oder mindestens eines Teils der Antriebseinrichtung und zusätzlich mindestens eines Rades des Fahrwerks, insbesondere zweier Rädergruppen, bewirkt wird. Diese Umpositionierung führt bevorzugt dazu, dass ein durch die Rädergruppen mit dem Führungsband bewirkter Formschluss aufgehoben wird. Zusätzlich wird ein Kontakt, insbesondere Reibschluss oder Formschluss, zwischen der Antriebseinrichtung und dem Führungsband aufgehoben, wodurch die Schweißvorrichtung von dem Führungsband beabstandet werden kann. Entsprechend ist die Ankoppelung der Schweißvorrichtung an dem Führungsband möglich.

Die Antriebseinrichtung 15, insbesondere das Kraftübertragungselement 85, ist somit bevorzugt aus einer zum Anliegen an dem Führungsband 6 ausgerichteten Stellung in eine weitere Stellung zum Beabstanden der Antriebseinrichtung von dem Führungsband 6 überführbar.

**Bezugszeichenliste**

| | | | |
|---|---|---|---|
| 1 | Schweißvorrichtung | 71 | Auslenkanordnung |
| 2 | Rahmenteil | 72 | erste Rädergruppe |
| 4 | Fahrwerk | 73 | Rad der ersten Rädergruppe |
| 5 | Halterahmen | 74 | Griffteil |
| 6 | Führungsband | 75 | Kraftübertragungselement |
| 10 | Rohr | 76 | Mittel zum Transferieren einer Schwenkbewegung in eine Linearbewegung |
| 11 | Anschlusseinrichtung | 77 | zweite Rädergruppe |
| 13 | weitere Anschlusseinrichtung | 81 | dritte Rädergruppe |
| 14 | Schweißkopf | 82 | Stirnseitenrad |
| 15 | Antriebseinrichtung | 83 | Unterseiten rad |
| 16 | Drahtvorschubeinrichtung | 84 | Oberseitenrad |
| 19 | Verbindungselement | 85 | Antriebsrad |
| 28 | Einstellelement | 86 | Motor |
| 36 | Drahtbevorratungseinrichtung | 87 | Umpositionierbare Leit-Stütz-Struktur |
| 37 | Leitungselement | 88 | Führungselement |
| 50 | erster Rahmenanteil | 89 | Datenstecker Antriebseinrichtung |
| 52 | zweiter Rahmenanteil | 90 | Motorausrückhalterung / Halteeinrichtung |
| 54 | erstes Ende | 91 | Hubelement |
| 56 | zweites Ende | 92 | vierte Rädergruppe |
| 70 | An- und Abkopplungseinrichtung | 94 | unterseitiges Lager |
| 95 | oberseitiges Lager | 107 | erstes Ende des Hebelelements |
| 96 | Vorrichtungsfeste Leit-Stütz-Struktur | 108 | zweites Ende des Hebelelements |
| | | 109 | erster Hebelanteil |
| 97 | zweiter Fahrwerksteil | 110 | zweiter Hebelanteil |
| 98 | Verschiebeweg | 111 | Kontaktstelle |
| 99 | Schwenklager | 112 | Abstand |
| 100 | Motorentkoppelungseinrichtung | 113 | Verbindungsstelle zwischen dem |
| 101 | Betätigungselement | | Hebelelement und dem Aktuator |
| 102 | Fixteil | 114 | Verfahrteil |
| 103 | Federelement | 120 | Zapfenartiges Element |
| 104 | Aktuator | | |
| 105 | Schwenklager | | |
| 106 | Hebelelement | | |

## Patentansprüche

1. Orbitalschweißvorrichtung (1),
mindestens umfassend
ein Fahrwerk (4) zum Ankoppeln der Schweißvorrichtung (1) an einem Führungsband (6), wobei das Fahrwerk (4) zumindest eine erste Rädergruppe (72) und eine zweite Rädergruppe (77) aufweist, wobei die erste Rädergruppe (72) und die zweite Rädergruppe (77) zumindest orthogonal zur Transportrichtung voneinander beabstandet sind, und wobei die erste Rädergruppe (72) und die zweite Rädergruppe (77) orthogonal zur Transportrichtung zumindest in zwei verschiedenen Relativpositionen zueinander anordenbar sind,
eine Antriebseinrichtung (15) zum Bewegen der Schweißvorrichtung (1) gegenüber dem Führungsband (6),
wobei die Antriebseinrichtung (15) zumindest einen Motor (86) und ein mit dem Führungsband (6) in Kontakt bringbares Kraftübertragungselement (85) aufweist, eine Motorentkoppelungseinrichtung (100) zum Umpositionieren mindestens eines Elements, insbesondere des Kraftübertragungselements (85), der Antriebseinrichtung (15),
wobei durch die Motorentkoppelungseinrichtung (100) in zumindest einer Relativposition zwischen der ersten Rädergruppe (72) und der zweiten Rädergruppe (77) in einem Betriebszustand zumindest das eine Element der Antriebseinrichtung (15) derart umpositionierbar ist, dass eine Bewegung der Schweißvorrichtung (1) entlang dem Führungsband (6) von einem Betrieb der Antriebseinrichtung (15) entkoppelbar ist, insbesondere das Kraftübertragungselement (100) vom Führungsband (6) beabstandet ist,
und eine An- und Abkoppelungseinrichtung (70) zum Ankoppeln des Fahrwerks (4) und der Antriebseinrichtung (15) an das Führungsband (6) und zum Abkoppeln des Fahrwerks (4) und der Antriebseinrichtung (15) von dem Führungsband (6) vorgesehen ist,
wobei die An- und Abkoppelungseinrichtung (70) eine Auslenkanordnung (71) zum zeitgleichen Umpositionieren mindestens eines Elements der Antriebseinrichtung (15) und mindestens eines Rades (73) mindestens einer Rädergruppe des Fahrwerks (4) aufweist,
**dadurch gekennzeichnet, dass**
sich die Längsrichtung der Schweißvorrichtung (1) in Transportrichtung erstreckt und sich die Breitenrichtung der Schweißvorrichtung (1) orthogonal zur Längsrichtung des Führungsbandes (6), erstreckt,
wobei die Antriebseinrichtung (15) in Breitenrichtung F linear verschiebbar gelagert ist.

2. Schweißvorrichtung nach Anspruch 1,
**dadurch gekennzeichnet, dass**
eine Führungseinrichtung zum Vorgeben eines linearen Verschiebewegs der Antriebseinrichtung in Breitenrichtung vorgesehen ist.

3. Schweißvorrichtung nach Anspruch 1 oder 2,
**dadurch gekennzeichnet, dass**
die Motorentkoppelungseinrichtung manuell auslösbar ist.

4. Schweißvorrichtung nach einem der vorangegangenen Ansprüche,
**dadurch gekennzeichnet, dass**
mittels der Motorentkoppelungseinrichtung (100) die Antriebseinrichtung (15) gegenüber dem Führungsband (6) und der An- und Abkoppelungseinrichtung bewegbar ist.

5. Schweißvorrichtung nach Anspruch 4,
**dadurch gekennzeichnet, dass**
die Antriebseinrichtung (15), insbesondere das Kraftübertragungselement (85), aus einer zum Anliegen an dem Führungsband (6) ausgerichteten Stellung in eine weitere Stellung zum Beabstanden der Antriebseinrichtung von dem Führungsband (6) überführbar ist.

6. Schweißvorrichtung nach einem der vorangegangenen Ansprüche,
**dadurch gekennzeichnet, dass**
am Rahmenteil (2) oder im Bereich des Rahmenteils (2) mindestens ein Betätigungselement (101) zum Betätigen der Motorentkoppelungseinrichtung (100) angeordnet ist.

7. Schweißvorrichtung nach Anspruch 6,
**dadurch gekennzeichnet, dass**
mehrere Betätigungselemente (101) an voneinander beabstandeten Anteilen des Rahmenteils (2) oder in voneinander beabstandeten Anteilen im Bereich des Rahmenteils (2) ausgebildet sind.

8. Schweißvorrichtung nach einem der vorangegangenen Ansprüche,
**dadurch gekennzeichnet, dass**
eine Halteeinrichtung (90) zum Positionieren der Antriebseinrichtung (15) vorgesehen ist, wobei die Halteeinrichtung (90) gegenüber einem Fixteil (102) beweglich angeordnet ist, wobei zwischen dem Fixteil (102) und der Halteeinrichtung (90) mindestens ein Federelement (103) vorgesehen ist, wobei das Federelement (103) derart angeordnet ist, dass es eine Kraft zum Positionieren der Halteeinrichtung (90) in einer Stellung bereitstellt, in der die Antriebseinrichtung (15) in dem Betriebszustand mit dem Führungsband (6) zusammenwirken kann.

9. Schweißvorrichtung nach Anspruch 8,
**dadurch gekennzeichnet, dass**
die Motorentkoppelungseinrichtung (100) einen Aktuator (104) zum Umpositionieren der Halteeinrichtung (90) aufweist, wobei der Aktuator (104) derart ausgeführt ist, dass die Halteeinrichtung (90) unter Stauchung des mindestens einen Federelements (103) auslenkbar ist, wobei die Antriebseinrichtung (15) im Betriebszustand durch die Umpositionierung von dem Führungsband (6) entkoppelbar ist.

10. Schweißvorrichtung nach Anspruch 9,
**dadurch gekennzeichnet, dass**
der Aktuator (104) bevorzugt als Magnetzylinder ausgeführt ist und mit einem an einem Schwenklager (105) rotierbar gelagerten Hebelelement (106) verbunden ist, wobei das Schwenklager (105) beabstandet zu den Enden (107, 108) des Hebelelements (106) mit dem Hebelelement (106) verbunden ist, wobei durch ein erstes Ende (107) des Hebelelements (106) und das Schwenklager (105) ein erster Hebelanteil (109) gebildet wird und durch das zweite Ende (108) des Hebelelements (106) und das Schwenklager (105) ein zweiter Hebelanteil (110) gebildet wird, wobei ein Hebelanteil (109) länger ist als der andere Hebelanteil (110) und das Hebelelement (106) im Bereich des ersten Endes (107) mit dem Aktuator (104) verbunden ist.

11. Schweißvorrichtung nach Anspruch 10,
**dadurch gekennzeichnet, dass**
der Aktuator (104) durch die Betätigung eines der Betätigungselemente (101) aktivierbar ist, wobei der Aktuator (104) infolge der Aktivierung eine Auslenkung des Hebelelements (106) bewirkt, wobei der zweite Hebelanteil (110) mit der Halteeinrichtung (90) und/oder der Antriebseinrichtung (15) in Kontakt kommt und die Halteeinrichtung (90) entgegen der Federkraft des Federelements (103) verschiebt.

## Claims

1. Orbital welding device (1), at least comprising a chassis (4) for coupling the welding device (1) to a guide band (6), the chassis (4) having at least a first group of wheels (72) and a second group of wheels (77), wherein the first group of wheels (72) and the second group of wheels (77) are at least orthogonally to the transport direction spaced from each other, and wherein the first wheel group (72) and the second wheel group (77) can be arranged orthogonally to the transport direction at least in two different relative positions to each other, a drive device (15) for moving the welding device (1) relative to the guide band (6), wherein the drive device (15) having at least one motor (86) and a force transmission element (85) that can be brought into contact with the guide band (6), a motor decoupling device (100) for repositioning of at least one element, in particular the force transmission element (85), of the drive device (15), wherein by the motor decoupling device (100) in at least one relative position between the first wheel group (72) and the second wheel group (77) in an operating state the at least one element of the drive device (15) can be repositioned in such a way that a movement of the welding device (1) along the guide band (6) can be decoupled from an operation of the drive device (15), in particular the force transmission element (100) is spaced from the guide band (6), **characterized in that** the longitudinal direction of the welding device (1) extends in the transport direction and the width direction of the welding device (1) extends orthogonally to the longitudinal direction of the guide band (6), wherein the drive device (15) being mounted so as to be linearly displaceable in the width direction F and a coupling and uncoupling device (70) for coupling the chassis (4) and the drive device (15) to the guide band (6) and for uncoupling the chassis (4) and the drive device (15) from the guide band (6) is provided, wherein the coupling and decoupling device (70) has a deflection arrangement (71) for the simultaneous repositioning of at least one element of the drive device (15) and at least one wheel (73) of at least one group of wheels of the chassis (4).

2. Welding device according to claim 1,
**characterized in that**
a guide device is provided for specifying a linear displacement path of the drive device in the width direction.

3. Welding device according to claim 1 or 2,
**characterized in that**
the motor decoupling device can be triggered manually.

4. Welding device according to one of the preceding claims,
**characterized in that**
by means of the motor decoupling device (100) the drive device (15) can be moved relative to the guide band (6) and the coupling and uncoupling device.

5. Welding device according to claim 4,
**characterized in that**
the drive device (15), in particular the force transmission element (85), can be transferred from a position aligned to rest against the guide band (6) into a further position for spacing the drive device from the guide band (6).

6. Welding device according to one of the preceding claims,
**characterized in that**
at least one actuating element (101) for actuating the motor decoupling device (100) is arranged on the frame part (2) or in the area of the frame part (2).

7. Welding device according to claim 6,
**characterized in that**
several actuating elements (101) are formed on parts of the frame part (2) which are spaced apart from one another or in parts spaced apart from one another in the area of the frame part (2).

8. Welding device according to one of the preceding claims,
**characterized in that**
a holding device (90) is provided for positioning the drive device (15), wherein the holding device (90) being movably arranged with respect to a fixed part (102), with between the fixed part (102) and the holding device (90) at least one spring element (103) is provided, wherein the spring element (103) being arranged such that it provides a force for positioning the holding device (90) in a position in which the drive device (15) can interact with the guide band (6) in the operating state.

9. Welding device according to claim 8,
**characterized in that**
the motor decoupling device (100) has an actuator (104) for repositioning the holding device (90), wherein the actuator (104) being designed such that the holding device (90) is deflected under compression of the at least one spring element (103), wherein the drive device (15) can be decoupled by repositioning from the guide band (6) in the operating state.

10. Welding device according to claim 9,
**characterized in that**
the actuator (104) is preferably designed as a magnetic cylinder and is connected to a lever element (106) rotatably mounted on a pivot bearing (105), wherein the pivot bearing (105) being spaced from the ends (107, 108) of the lever element (106) connected to the lever element (106), wherein a first lever portion (109) being formed by a first end (107) of the lever element (106) and the pivot bearing (105) and by the second end (108) of the lever element (106) and the pivot bearing (105) a second lever part (110) is formed, wherein one lever part (109) being longer than the other lever part (110) and the lever element (106) in the area of the first end (107) is connected to the actuator (104).

11. Welding device according to claim 10,
**characterized in that**
the actuator (104) can be activated by actuating one of the actuating elements (101), wherein the actuator (104) causing a deflection of the lever element (106) as a result of the activation, wherein the second lever component (110) comes into contact with the holding device (90) and/or the drive device (15) and displaces the holding device (90) against the spring force of the spring element (103).

## Revendications

1. Dispositif de soudage orbital (1),
comprenant au moins
un train de roulement (4) pour le couplage du dispositif de soudage (1) à une bande de guidage (6), dans lequel le train de roulement (4) présente au moins un premier groupe de roues (72) et un second groupe de roues (77), dans lequel le premier groupe de roues (72) et le second groupe de roues (77) sont espacés au moins orthogonalement au sens de transport l'un de l'autre, et dans lequel le premier groupe de roues (72) et le second groupe de roues (77) peuvent être agencés orthogonalement au sens de transport au moins dans deux positions relatives différentes l'une par rapport à l'autre,
un dispositif d'entraînement (15) pour le déplacement du dispositif de soudage (1) par rapport à la bande de guidage (6),
dans lequel le dispositif d'entraînement (15) présente au moins un moteur (86) et un élément de transmission de force (85) pouvant être amené en contact avec la bande de guidage (6),
un dispositif de découplage de moteur (100) pour le repositionnement au moins d'un élément, en particulier de l'élément de transmission de force (85), du dispositif d'entraînement (15), dans lequel par le dispositif de découplage de moteur (100) dans au moins une position relative entre le premier groupe de roues (72) et le second groupe de roues (77) dans un état de fonctionnement au moins l'un élément du dispositif d'entraînement (15) est repositionnable de telle manière qu'un mouvement du dispositif de soudage (1) puisse être découplé le long de la bande de guidage (6) d'un fonctionnement du dispositif d'entraînement (15), en particulier l'élément de transmission de force (100) est espacé de la bande de guidage (6),
et un dispositif de couplage et de découplage (70) est prévu pour le couplage du train de roulement (4) et du dispositif d'entraînement (15) à la bande de guidage (6) et pour le découplage du train de roulement (4) et du dispositif d'entraînement (15) de la bande de guidage (6),
dans lequel le dispositif de couplage et de découplage (70) présente un agencement de déviation (71) pour le repositionnement simultané au moins d'un élément du dispositif d'entraînement (15) et au moins d'une roue (73) au moins d'un groupe de roues du train de roulement (4),
**caractérisé en ce que**
le sens longitudinal du dispositif de soudage (1) s'étend dans le sens de transport et le sens de la largeur du dispositif de soudage (1) s'étend orthogonalement au sens longitudinal de la bande de guidage (6),
dans lequel le dispositif d'entraînement (15) est logé de manière mobile linéairement dans le sens de la largeur F.

2. Dispositif de soudage selon la revendication 1,
**caractérisé en ce que**
un dispositif de guidage est prévu pour la définition d'une course de déplacement linéaire du dispositif d'entraînement dans le sens de la largeur.

3. Dispositif de soudage selon la revendication 1 ou 2,
**caractérisé en ce que**
le dispositif de découplage de moteur peut être déclenché manuellement.

4. Dispositif de soudage selon l'une des revendications précédentes,
**caractérisé en ce que**
le dispositif d'entraînement (15) est mobile au moyen du dispositif de découplage de moteur (100) par rapport à la bande de guidage (6) et au dispositif de couplage et de découplage.

5. Dispositif de soudage selon la revendication 4,
**caractérisé en ce que**
le dispositif d'entraînement (15), en particulier l'élément de transmission de force (85), peut être transféré d'une position orientée pour le repos contre la bande de guidage (6) dans une autre position pour l'espacement du dispositif d'entraînement de la bande de guidage (6).

6. Dispositif de soudage selon l'une des revendications précédentes,
**caractérisé en ce que**
au moins un élément d'actionnement (101) est agencé sur la partie de cadre (2) ou dans la zone de la partie de cadre (2) pour l'actionnement du dispositif de découplage de moteur (100).

7. Dispositif de soudage selon la revendication 6,
**caractérisé en ce que**
plusieurs éléments d'actionnement (101) sont réalisés sur des parts espacées l'une de l'autre de la partie de cadre (2) ou dans des parts espacées l'une de l'autre dans la zone de la partie de cadre (2).

8. Dispositif de soudage selon l'une des revendications précédentes,
**caractérisé en ce que**
un dispositif de retenue (90) pour le positionnement du dispositif d'entraînement (15) est prévu, dans lequel le dispositif de retenue (90) est agencé de manière mobile par rapport à une partie fixe (102), dans lequel au moins un élément de ressort (103) est prévu entre la partie fixe (102) et le dispositif de retenue (90), dans lequel l'élément de ressort (103) est agencé de telle manière qu'il fournisse une force pour le positionnement du dispositif de retenue (90) dans une position, dans laquelle le dispositif d'entraînement (15) peut coagir dans l'état de fonctionnement avec la bande de guidage (6).

9. Dispositif de soudage selon la revendication 8, **caractérisé en ce que**
le dispositif de découplage de moteur (100) présente un actionneur (104) pour le repositionnement du dispositif de retenue (90), dans lequel l'actionneur (104) est réalisé de telle manière que le dispositif de retenue (90) puisse être dévié sous compression d'au moins un élément de ressort (103), dans lequel le dispositif d'entraînement (15) peut être découplé dans l'état de fonctionnement par le repositionnement de la bande de guidage (6).

10. Dispositif de soudage selon la revendication 9,
**caractérisé en ce que**
l'actionneur (104) est réalisé de préférence comme cylindre magnétique et est relié à un élément de levier (106) logé de manière à pouvoir tourner au niveau d'un palier pivotant (105), dans lequel le palier pivotant (105) est relié à distance des extrémités (107, 108) de l'élément de levier (106) à l'élément de levier (106), dans lequel une première part de levier (109) est formée par une première extrémité (107) de l'élément de levier (106) et le palier pivotant (105) et une seconde part de levier (110) est formée par la seconde extrémité (108) de l'élément de levier (106) et le palier pivotant (105), dans lequel une part de levier (109) est plus longue que l'autre part de levier (110) et l'élément de levier (106) est relié dans la zone de la première extrémité (107) à l'actionneur (104).

11. Dispositif de soudage selon la revendication 10,
**caractérisé en ce que**
l'actionneur (104) est activable par l'actionnement d'un des éléments d'actionnement (101), dans lequel l'actionneur (104) provoque à la suite de l'activation une déviation de l'élément de levier (106), dans lequel la seconde part du levier (110) vient en contact avec le dispositif de retenue (90) et/ou le dispositif d'entraînement (15) et le dispositif de retenue (90) se déplace dans le sens inverse à la force de ressort de l'élément de ressort (103).
